Europäisches Patentamt

European Patent Office

Office européen des brevets

(11) Veröffentlichungsnummer: **0 054 857**
**B1**

(12) **EUROPÄISCHE PATENTSCHRIFT**

(45) Veröffentlichungstag der Patentschrift: **07.05.86**

(51) Int. Cl.⁴: **C 08 L 1/10, C 08 L 51/00**

(21) Anmeldenummer: **81110331.6**

(22) Anmeldetag: **11.12.81**

(54) Thermoplastische Formmassen aus Copfropfpolymerisaten von Celluloseestern.

(30) Priorität: **23.12.80 DE 3048696**

(43) Veröffentlichungstag der Anmeldung:
**30.06.82 Patentblatt 82/26**

(45) Bekanntmachung des Hinweises auf die
Patenterteilung:
**07.05.86 Patentblatt 86/19**

(84) Benannte Vertragsstaaten:
**DE FR GB IT**

(56) Entgegenhaltungen:
**EP-A-0 009 695**
**DE-A-2 542 613**
**FR-A-2 305 464**
**US-A-3 632 677**

(73) Patentinhaber: **BAYER AG**
**Konzernverwaltung RP Patentabteilung**
**D-5090 Leverkusen 1 Bayerwerk (DE)**

(72) Erfinder: **Alberts, Heinrich, Dr.**
**Morgengraben 16**
**D-5000 Köln 80 (DE)**
Erfinder: **Fischer, Winfried, Dr. Bayer Japan Ltd.**
**Seiwa Bld.**
**12-15, Shiba Daimon 1-chome, Minato-ku**
**P.O. Box Shiba 1 59 Tokyo 105-91 (JP)**
Erfinder: **Leuschke, Christian**
**Neckarstrasse 36**
**D-4047 Dormagen (DE)**

Courier Press, Leamington Spa, England.

0 054 857

**Beschreibung**

Die Erfindung betrifft thermoplastische Formmassen aus Celluloseestern und Copfropfpolymerisaten, die durch Polymerisation von Vinylmonomeren, insbesondere von ungesättigten Estern, in Gegenwart von Mischungen aus Celluloseestern und (Meth)Acrylsäureester(co)polymerisaten erhalten werden.

Formmassen aus Celluloseacetat können ohne Zusatz von niedermolekularen Weichmachern nicht thermoplastisch verarbeitet werden, da sich dieser Ester vor dem Erweichen zu zersetzen beginnt. Auch bei Celluloseacetopropionaten und -acetobutyraten liegen die Erweichungs- und Zersetzungstemperatur so nahe beieinander, daß auch diese Formmassen vor ihrer thermoplastischen Verarbeitung mit Weichmachern abgemischt werden müssen. Damit erreicht man die notwendige Herabsetzung der Verarbeitungstemperatur und Verarbeitungsviskosität.

Als Weichmacher für organische Celluloseester dienen vornehmlich aliphatische Ester der Phthalsäure, Adipinsäure, Azelainsäure, Sebacinsäure und Phosphorsäure wie beispielsweise Dimethylphthalat, Diethylphthalat, Dibutyladipat, Dioctyladipat, Dibutylacelat, Trichlorethylphosphat und Tributylphosphat. Oft ist es auch vorteilhaft, Weichmachergemische einzusetzen.

Obwohl die mit Weichmachern modifizierten Celluloseesterformmassen eine sehr gute Transparenz zeigen, wäre es wünschenswert, für manche Anwendungszwecke ihre Wärmeformbeständigkeit weiter zu verbessern. Außerdem wandern die Weichmacher mit der Zeit an die Oberfläche der Formkörper, so daß z.B. Folien aus modifizierten Celluloseestern nicht zur Verpackung von bestimmten Lebensmitteln verwendet werden können.

Aus der deutschen Auslegeschrift 1 303 219 sind Abmischungen aus organischen Celluloseestern, niedermolekularen Weichmachern und Olefinpolymerisaten bekannt. Bei einem höheren Gehalt an Olefinpolymerisaten sind jedoch solche Formmassen nicht ·mehr transparent. Außerdem dienen hier herkömmliche niedermolekulare Ester mit den bekannten Nachteilen als Weichmacher.

Die Verwendung polymerer Weichmacher für Cellulosemischester ist ebenfalls bekannt. In der US-Patentschrift 3 682 850 werden thermoplastische Mischungen aus 40 bis 90 Gew.-% Celluloseestern und 10 bis 60 Gew.-% eines Ethylen-Vinylacetatcopolymeren mit einem Vinylacetatgehalt von 75 bis 99 Gew.-% beschrieben, die durch gute mechanische Festigkeitswerte und hohe Transparenz gekennzeichnet sind.

Aus der Deutschen Offenlegungsschrift 2 426 178 sind ferner transparente thermoplastische Formmassen aus organischen Celluloseestern und Ethylen-Vinylestercopolymeren bekannt. Die eingesetzten Ethylen-Vinylestercopolymeren enthalten 30—98, vorzugsweise 60—98 Gew.-% eingebauten Vinylester.

Mischungen aus Cellulosemischestern und Ethylen-Vinylester-copolymeren mit weniger als 75 Gew.-% an eingebautem Vinylester in der Ethylencopolymerisatkomponente sind zwar im allgemeinen transparent, weisen aber mit steigendem Gewichtsanteil des Ethylenvinylestercopolymeren in der Abmischung eine zunehmende Neigung zu Weißruch (Crazing) bei Biege- oder Dehnungsbeanspruchung auf. Ferner weisen Mischungen aus (Meth)Acrylsäureester- homo- und copolymeren mit Cellulosemischestern nur eine sehr begrenzte Verträglichkeit auf, so daß z.B. die Herstellung weicher, flexibler und trotzdem zäher Formmassen nicht möglich ist.

Diese Minderung der Transparenz und der mechanischen Festigkeit ist für technische Anwendungen unerwünscht. Die nicht ausreichende Verträglichkeit der Polymeren verhindert zugleich die Herstellung weicher, flexibler Formmassen, die auch unter extremer Dehnungs- oder Biegebeanspruchung hoher Transparenz ohne Weißbruch aufweisen sollen.

Es wurde nun gefunden, daß die vorerwähnten Nachteile überwunden und hochtransparente zähe, weiche und flexible Formmassen auf der Basis von organischen Celluloseestern und (Meth)Acrylsäureestercopolymeren, die gegebenenfalls bis zu 75 Gew.-% eingebauten Vinylestern enthalten können, erhalten werden, wenn auf Mischungen aus organischen Celluloseestern und (Meth)Acrylsäureesterpolymerisaten als Pfropfsubstrat Vinylmonomere, vorzugsweise Vinylester und Acrylester oder deren Gemische aufgepfropft werden. Durch die Pfropfung werden gleichzeitig die polymeren Komponenten des Pfropfsubstrats ganz oder teilweise untereinander verbrückt. Ferner wurde gefunden, daß Abmischungen aus diesen Copfropfpolymeren und Cellulosemischestern ausgezeichnete Verträglichkeiten und sehr gute mechanische Werte aufweisen.

Gegenstand der Erfindung sind somit thermoplastische Formmassen, bestehend aus

1) 1—99, vorzugsweise 20—95 Gew.-% eines Pfropfsubstrates, das sich zusammensetzt aus
   a) 1—99, vorzugsweise 20—95 Gew.-% eines (Meth)Acrylsäure-$C_1$—$C_{18}$-Alkylester-homo- oder copolymerisats und
   b) 99—1, vorzugsweise 80—5 Gew.-% eines Celluloseesters einer oder mehrerer aliphatischer $C_1$—$C_5$-Carbonsäuren und
2) 99 bis 1, vorzugsweise 85—15 Gew.-% polymerisierten Einheiten von
   a) 100 bis 80 Gew.-% Vinylestern und/oder Alkylestern der Acryl- und/oder·Methacrylsäure und
   b) 0—20 Gew.-% $C_2$—$C_4$-α-Olefinen,
wobei die Summe der Komponenten 1) und 2), sowie a) und b) jeweils 100 Gew.-% beträgt.

Ferner sind Gegenstand der Erfindung thermoplastische Formmassen, bestehend aus

2

I) 1 bis 99, vorzugsweise 50 bis 99 Gew.-% eines Celluloseesters einer oder mehrere aliphatischer $C_1$—$C_5$-Carbonsäuren und

II) 99 bis 1, vorzugsweise 50 bis 1 Gew.-% eines Copfropfpolymerisates aus

1) 1 bis 99, vorzugsweise 15 bis 85 Gew.-% eines Pfropfsubstrates, das sich zusammensetzt aus

a) 1 bis 99, vorzugsweise 20—95 Gew.-% eines (Meth)Acrylsäure-$C_1$—$C_{18}$-alkylester-homo- oder -copolymerisats und

b) 99—1, vorzugsweise 80—5 Gew.-% eines Celluloseesters einer oder mehrerer aliphatischer $C_1$—$C_5$-Carbonsäuren und

2) 99 bis 1, vorzugsweise 85 bis 15 Gew.-% polymerisierten Einheiten von

a) 100 bis 80 Gew.-% Vinylestern und/oder Alkylestern der Acryl- und/oder Methacrylsäure und

b) 0—20 Gew.-% $C_2$—$C_4$-α-Olefinen,

wobei die Summe der Komponenten I) und II), 1) und 2), sowie a) und b) jeweils 100 Gew.-% beträgt.

Geeignete Celluloseester zur Herstellung der erfindungsgemäßen Formmassen sind Celluloseester aliphatischer Carbonsäuren mit 1 bis 5 C-Atomen, vorzugsweise Celluloseacetat, -acetopropionat und -acetobutyrat.

Die Verfahren zur Herstellung von organischen Celluloseestern sind seit langem bekannt und werden beispielsweise in Ullmanns Encyclopädie der technischen Chemie (Verlag Urban und Schwarzenberg, München-Berlin, 1963) im 5. Band auf den Seiten 182 bis 201 beschrieben.

Bevorzugte Celluloseacetobutyrate enthalten
40 bis 50 Gew.-% Buttersäuregruppen und
15 bis 26 Gew.-% Essigsäuregruppen.

Besonders bevorzugt für die erfindungsgemäßen Formmassen eignen sich Celluloseacetobutyrate mit folgender Zusammensetzung:
42 bis 46 Gew.-% Buttersäuregruppen und
18 bis 22 Gew.-% Essigsäuregruppen.

Bevorzugte Celluloseacetopropionate enthalten im allgemeinen
50 bis 66 Gew.-% Propionsäuregruppen und
1 bis 12 Gew.-% Essigsäuregruppen
und besonders bevorzugte Celluloseacetopropionate haben folgende Zusammensetzung:
54 bis 66 Gew.-% Propionsäuregruppen und
4 bis 9 Gew.-% Essigsäuregruppen.

Von den Celluloseacetaten werden bevorzugt Sekundär-Celluloseacetat eingesetzt.

Die Herstellung der erfindungsgemäß einzusetzenden Pfropfgrundlage auf Basis von (Meth)Acrylsäureestercopolymeren erfolgt nach den an sich bekannten Methoden in gebräuchlicher Art und Weise. Die (Meth)Acrylsäureestercopolymeren sind vernetzt oder unvernetzt und weisen Glastemperaturen unter 0°C, vorzugsweise unter −20°C, insbesondere unter −30°C auf. die Ermittlung der Glasübergangstemperatur der (Meth)Acrylsäureester-Polymerisate kann z.B. nach der DSC-Methode (K. H. Illers, Makromol. Chemie 127 (1969), S. 1) erfolgen.

Für die Herstellung der Polymeren kommen (Meth)Acrylsäurealkylester mit 1 bis 18 C-Atomen, vorzugsweise mit 4 bis 8 C-Atomen im Alkylrest in Betracht. Besonders genannt seien Acrylsäure-n-butylester und Acrylsäure-2-ethylhexylester. Die (Meth)Acrylsäureester können bei der Herstellung der als Pfropfgundlage dienenden (Meth)Acrylsäureester-Polymerisate allein oder auch in Mischung miteinander eingesetzt werden. Ferner ist es möglich, statt (Meth)Acrylsäureester(co)polymerisaten auch Copolymere mit anderen Vinylmonomeren als Pfropfgrundlage zu verwenden. Als Vinylmonomere besonders geeignet sind Vinylester, Vinylether, Vinylhalogenide und Vinylaromaten. Besonders genannt seien Vinylacetat, Vinyladipat, Vinylstearat als Vinylester, $C_1$—$C_{18}$-Alkyl-Vinylether, insbesondere Ethyl-, n-Butyl- und 2-Ethylhexylvinylether, Vinylchlorid, Vinylfluorid und Vinylidenfluorid, Styrol und α-Methylstyrol. Falls gewünscht, können auch Copolymere mit (Meth)Acrylnitril und (Meth)acrylsäure als Pfropfgrundlage verwendet werden. Die nach speziellen Verfahren zugänglichen Copolymeren von (Meth)Acrylsäureestern mit $C_2$—$C_6$-α-Olefinen und Dienen sind ebenfalls geeignet. Als α-Olefin besonders geeignet ist Ethylen, als Diene werden Butadien und Isopren verwendet. Die löslichen Copolymeren werden in den an sich bekannten Lösungsmitteln, vorzugsweise Alkoholen, oder in Substanz hergestellt, die vernetzten Copolymeren vorzugsweise in Emulsion.

Um vernetzte (Meth)Acrylsäureester-Polymerisate zu erhalten, kann z.B. nach den in DE—PS 1 260 135 oder DE—OS 2 826 925 beschriebenen Verfahren vorgegangen werden.

Für die Herstellung der Copfropfpolymerisate kommen als Vinylester organische Vinylester von gesättigten, gegebenenfalls durch Halogen, insbesondere durch Chlor, substituierten aliphatischen Monocarbonsäuren mit 1—18 C-Atomen oder aromatischen Monocarbonsäuren mit 7—11 C-Atomen in Frage. Namentlich seien genannt: Vinylformiat, Vinylacetat, Vinylpropionat, Vinylchlorpropionat, Vinylbutyrat, Vinylisobutyrat, Vinylcapronat, Vinyllaurinat, Vinylmyristinat, Vinylstearat, Vinylbenzoat, vorzugsweise Vinylacetat.

Die nach dem Verfahren der Hochdrucksynthese hergestellten Ethylen (Meth)Acrylsäureester-Copolymerisate besitzen Schmelzindexwerte — nach DIN 53 735 bei 190°C und einer Belastung von 2,16 kp — zwischen 0,1 und 1000, vorzugsweise zwischen 1,0 und 20. Die in Tetralin bei 120°C gemessenen Grenzviskositäten liegen im allgemeinen zwischen 0,1 und 1,5 [dl/g]. Die nach der Methode der Lichtstreuung ermittelten Molekulargewichte liegen vorzugsweise zwischen 2500 und 1 Million. Die nach der Bezeihung $M_w/M_n$ — 1 definierte Uneinheitlichkeit U (G. Schulz, Z. phys. Chem. (B) 43 (1939) Seiten 25—34) liegt im Bereich von 1 bis 30. Diese Copolymerisate sind in Kohlenwasserstoffen, Alkoholen oder Estern löslich.

Die beispielsweise nach dem Verfahren der Lösungs- oder Emulsionspolymerisation hergestellten (Meth)Acrylsäure-$C_1$—$C_{18}$-Alkylester-Copolymerisate, besitzen Schmelzindexwerte (190°C, 21.1 N (2,16 kp)), die größer als 100 sein können, vorzugsweise liegt der Schmelzindexbereich unter 35. Die mittels Lichtstreuung gemessenen Molekulargewichte liegen vorzugsweise zwischen 4000 und einer Million. Die Uneinheitlichkeit U beträgt im allgemeinen 1 bis 15. Die Copolymerisate sind löslich in Kohlenwasserstoffen, Alkoholen und Estern und besitzen vorzugsweise Grenzviskositäten η zwischen 0,5 und 2,5 [dl/g] in Toluol.

Als Monomere zur Herstellung der Copfropfpolymerisate werden in erster Linie vinylester und/oder Alkylester der (Meth)Acrylsäure eingesetzt. Geeignet sind die $C_1$—$C_{14}$—, vorzugsweise die $C_1$—$C_4$-Alkylester der Acryl- und/oder Methacrylsäure wie Methyl(meth)acrylat, Ethyl(meth)acrylat, n-Propyl- und Isopropyl(meth)acrylat, n-Butyl- und Isobutyl(meth)acrylat und 2-Ethylhexyl(meth)acrylat. Geeignete Vinylester sind die bereits weiter oben beschriebenen Vinylester aliphatischer oder aromatischer Monocarbonsäuren, vorzugsweise Vinylacetat.

Weitere geeignete Monomere sind $C_2$—$C_4$-α-Olefine wie Ethylen, Propylen und Isobutylen sowie gegebenenfalls Acrylsäure und Methacrylsäure.

Die Pfropfpolymerisation wird in Lösung oder in Masse durchgeführt. Als Lösungsmittel seien genannt Kohlenwasserstoffe wie Benzol, Toluol, Xylol, Alkohole wie Methanol, Ethanol, Propanol, iso-Propanol, n-Butanol, tert.-Butanol, chlorierte Kohlenwasserstoffe wie Chlorbenzol, Methylenchlorid, Tetrachlorethylen, Ester wie Essigsäuremethyl-, -ethyl- oder -butylester und Eisessig oder ihre Gemische.

Das Lösen der Pfropfsubstrate kann in bekannter Weise im ausgewählten Lösungsmittelsystem durchgeführt werden. Man kann selbstverständlich zunächst die Lösung des einen Pfropfsubstrates herstellen und dann in dieser Lösung oder in einem beliebigen, mit dem ersten Lösungsmittel mischbaren Lösungsmittel, das zweite Polymer auflösen und sodann die beiden Mischungen vereinigen und die so erhaltene homogene Lösung für die Pfropfreaktion einsetzen. Die Pfropfpolymerisation wird bevorzugt in homogener Phase durchgeführt, kann aber prinzipiell auch in heterogener Phase erfolten. Es ist auch durchaus möglich, zunächst eine homogene Phase aus Pfropfsubstrat, Vinylmonomeren und gegebenenfalls Lösungsmittel herzustellen, die Lösung in Wasser zu dispergieren und dann gegebenenfalls nach Zusatz des Katalysators zu polymerisieren. Die Polymerisation kann kontinuierlich oder diskontinuierlich erfolgen.

Die Pfropfreaktion kann auch mit oder ohne Lösungsmittel in Polymerisationsschnecken durchgeführt werden, und das Abdampfen des Lösungsmittel oder der Restmonomeren aus dem Pfropfpolymerisationsansatz in Ausdampfschnecken, Dünnschichtverdampfern oder Sprühtrocknern erfolgen.

Die Polymerisation wird bei Temperaturen zwischen −20 und +250°C, vorzugsweise von +30 bis +180°C und bei Drucken zwischen Normaldruck bis 300 bar, vorzugsweise bis 25 bar durchgeführt.

Die Polymerisationskatalysatoren können vor, während oder nach dem Löse- bzw. Mischvorgang dem Polymerisationsansatz zugefügt werden. Vorzugsweise werden die Katalysatoren nach Herstellung der homogenen Pfropfsubstratlösung mit den Monomeren oder getrennt von den Monomeren in die Reaktionsmischung eingetragen.

Die Polymerisationskatalysatoren werden zweckmäßigerweise in einer Menge von 0,001 bis 2 Gew.-%, bezogen auf die Summe von Pfropfsubstrat und Pfropfmonomeren eingesetzt. Diese Mengen können selbstverständlich weit überschritten werden.

Als Polymerisationskatalysatoren können Per- oder Azoverbindungen oder Radikale liefernde hochsubstituierte Ethanderivate wie z.B. Benzpinakol, verwendet werden. Beispielhaft seien genannt: Benzoylperoxid, tert.-Butylperpivalat, Lauroylperoxid, tert.-Butylperoctoat, tert.-Butylperbenzoat, di-tert.-Butylperoxid, tert.-Butylperisononanat, Diisopropylpercarbonat, Dicyclohexylpercarbonat, Dicumylperoxid, tert.-Butylperneodecanoat, Azobisisobuttersäurenitril oder Ester der Azobisisobuttersäure wie z.b. deren Bis-ethylester.

Initiatorradikale können ferner mit bekannten Redoxsystemen oder auch mit Hilfe von UV-Strahlung, aktinischem Licht oder beschleunigten Elektronen erzeugt werden.

Bei der Polymerisation werden die eingesetzten Monomeren sowohl auf den Celluloseester als auch auf das (Meth)Acrylsäureester(co)polymerisat aufgepfropft unter Bildung von Copfropfpolymerisaten, die über polymerisierte Einheiten der Monomeren querverbrückt sind. Diese Querverbrückung ist aufgrund polymeranalytischer Untersuchungen der Pfropfpolymeren nachgewiesen (vgl. Beispiel 1 im Experimentellen Teil).

Diese neuartige Querverbindung der an und für sich zur Entmischung niegenden Ausgangspolymeren macht die gefundene außerordentliche gute Verträglichkeit der Copfropfpolymeren verständlich.

Die Herstellung der Abmischungen kann nach bekannten Verfahren über eine Lösung und Aufarbeitung der Lösung durch Fällung und Trocknung oder durch Ausdampfen der Lösungsmittel über Ausdampfschnecken, Dünnschichtverdampfer, Schlangenrohrverdampfer oder Sprühtrockner erfolgen. Ferner können die Abmischungen in der Schmelze auf einer Walze, in Schneckenmaschinen oder Knetern hergestellt werden.

Die erfindungsgemäßen Formmassen können gegebenenfalls noch mit niedermolekularen Weichmachern modifiziert werden.

Geeignete niedermolekulare Weichmacher sind Dimethylphthalat, Diethylphthalat, Triphenylphosphat, Methylethylenglykolphthalat, Di-n-butylsebacat, Ethylbutylenglykolphthalat, Butyl-butylenglykolphthalat, Dibutylphthalat, Dioctyladipat, Dioctylphthalat, Butylbenzylphthalat und Triacetin.

Die erfindungsgemäßen Formmassen können außerdem Additive enthalten, z.B. um die Polymermischungen zu färben, zu pigmentieren, um ihre Oxidations- oder Lichtbeständigkeit zu verbessern oder um die Entflammbarkeit zu verringern.

Die erfindungsgemäßen Formmassen aus Copfropfpolymerisaten von (Meth)Acrylsäureester-Copolymerisaten und organischen Celluloseestern und/oder ihren Abmischungen mit organischen Celluloseestern zeigen einen bemerkenswerten Anstieg der nach DIN 53 453 gemessenen Kerbschlagzähigkeit. Außerdem zeichnen sie sich durch eine verbesserte Formbeständigkeit in der Wärme aus, die z.B. nach DIN 53 460 als Vicat-Erweichungstemperatur gemessen wird. Die Vicat-Erweichungstemperaturen liegen bis zu 50°C über den Erweichungstemperaturen der mit niedermolukularen Weichmachern modifizierten Celluloseestern.

Gegenüber diesen herkömmlichen Celluloseestern-Formmassen zeigen die erfindungsgemäßen Formmassen außerdem noch verbesserte mechanische Eigenschaften wie beispielsweise eine Erhöhung der Härte, der Zugfestigkeit, der Biegefestigkeit, des Elastizitäts-Moduls und der Tieftemperaturschlagzähigkeit.

Der bekannte Effekt der sogenannten Weichmacherwanderung tritt bei den Copfropfpolymerisaten aus organischen Celluloseestern, (Meth)Acrylsäureesterhomo- und -copolymerisaten und Vinylmonomeren und ihren Abmischungen mit organischen Celluloseestern nicht auf, wodurch solche Formmassen auch beispielsweise für Anwendungen, die einen Kontakt mit Lebensmitteln schaffen, besonders gut geeignet sind.

Die erfindungsgemäßen Polymermassen aus Copfropfpolymerisaten organischer Cellulosesester, (Meth)Acrylsäureester(co)polymerisaten und Vinylmonomeren und ihre Abmischungen mit organischen Celluloseestern lassen sich problemlos auf bekannten Extrudern und Spritzgußmaschinen kontinuierlich und diskontinuierlich verarbeiten und zeigen dabei eine gute Fließfähigkeit.

Es lassen sich Formkörper jeder Art herstellen sowie Acetatseide, Blockacetat, Folienträger für Sicherheitsfilme, Elektroisolierfolien und Lacke.

Die verbesserte Heißluft- und Alterungsbeständigkeit der Produkte macht auch ihren Einsatz für Außenanwendungen möglich.

Die folgenden Beispiele erläutern die Erfindung. Prozentangaben beziehen sich stets auf das Gewicht.

Herstellung der Copfropfpolymerisate

Beispiel 1

In einem 40 l-Rührautoklaven wird eine Lösung aus 2,6 kg eines handelsüblichen Polyethylacrylatkautschuks, 2,6 kg eines Celluloseacetobutyrats enthaltend 45 Gew.-% Buttersäure- und 19 Gew.-% Essigsäuregruppen, 20,8 kg tert. Butanol und 2,6 kg Vinylacetat unter Stickstoff auf 115°C erwärmt. Unter Konstanthalten der Innentemperatur auf 115°C wird eine Lösung aus 2,6 kg tert. Butanol, 2,6 kg Vinylacetat und 20 g Benzoylperoxid innerhalb von 3 Stunden hinzudosiert. Man rührt noch 3 Stunden nach, versetzt die homogene Lösung sodann mit 20 g 2,6-Di-tert.-butyl-4-methyl-phenol und arbeitet den Ansatz über eine Ausdampfschnecke auf.

Man erhält 8,4 kg eines Copfropfpolymerisates mit der folgenden Zusammensetzung:

47,4 Gew.-% polymerisierte Einheiten aus Vinylacetat
26,3 Gew.-% aus Acrylatkautschuk
26,3 Gew.-% aus Celluloseacetobutyrat
und einer Grenzviskosität

$$\eta = 1{,}34 \left[ \frac{dl}{g} \right] .$$

Eine aus dem Pfropfpolymerisat bei 170°C und 200 bar Preßdruck hergestellte Preßplatte ist hochtransparent, weich und flexibel und weist keinerlei Weißbruch (Crazing) bei Dehnungsbeanspruchung auf.

Mittels Fraktionierung mit entmischenden Flüssigkeiten (vgl. R. Kuhn, Makromol. Chem. 177 (1976) 1525—1547) wurde die Pfropfpolymerisatstruktur wie folgt polymeranalytisch aufgeklärt: Demnach sind etwa 80—85 Gew.-% des eingesetzten Vinylacetats auf die beiden polymeren Substrate aufgepfropft und es liegen etwa 60—62 Gew.-% des eingesetzten Celluloseesters über Vinylacetatbrücken mit dem eingesetzten Acrylatkautschuk in querverbrückter ("gekoppelter") Form vor.

In Anlehnung an die Arbeitsweise des Beispiels 1 wurden die in der Tabelle 1 aufgeführten Copfropfpolymerisate der folgenden Zusammensetzung hergestellt:

5

# 0 054 857

## TABELLE 1

| Beispiel | Gew.-% Cellulose-acetobutyrat | Gew.-% Cellulose-acetopropionat | Gew.-% Acrylatkaut-schuk | Vinyl-acetat | Ethyl-acrylat | n-Butyl-acrylat | Grenz-viskosität [η] dl/g |
|---|---|---|---|---|---|---|---|
| 2 | — | 27,8 | 27,8 | 44,4 | — | — | 1,58 |
| 3 | 16,8 | — | 33,5 | 49,7 | — | — | 1,45 |
| 4 | — | 16,8 | 33,5 | 49,7 | — | — | 1,47 |
| 5 | 27,3 | — | 27,3 | — | 45,4 | — | 1,60 |
| 6 | — | 26,8 | 26,8 | — | 46,4 | — | 1,65 |
| 7 | 37,5 | — | 12,5 | — | — | 50 | 1,23 |
| 8 | 38,2 | — | 24,5 | 18,5 | — | 18,8 | 1,15 |

Herstellung der Formmassen

Beispiele 9 bis 17

Celluloseacetobutyrat mit 45% Buttersäure und 19% Essigsäuregruppen wird mit den in der Tabelle 2 angegebenen Mengen der Copfropfpolymerisate auf einer Walze bei 170°C intensiv vermischt, wobei die Summe beider Komponenten 100% beträgt.

Die Walzfelle werden granuliert und anschließend bei einer Massetemperatur von 230C auf einer Spritzgußmaschine zu Prüfkörpern verspritzt.

In der Tabelle 2 bedeuten:

$a_n$ = Schlagzähigkeit nach DIN 53 453 kJ/m$^2$

$a_k$ = Kerbschlagzähigkeit nach DIN 53 453 kJ/m$^2$

Vicat = Erweichungstemperatur in °C nach DIN 53 460, Verfahren B, Kraft 49,05 NJ

$H_k^{30}$ = Kugeldruckhärte nach 30 S nach DIN 53 456 in N/mm$^2$.

## TABELLE 2

| Beispiel | Copfropfpoly-merisat | [%][a] | $a_n$ [kJ/m$^2$] Raumtemp. | −40°C | $a_k$ [kJ/m$^2$] | Vicat [°C] | $H_k30$ [N/mm$^2$] |
|---|---|---|---|---|---|---|---|
| 9 | 1 | 10 | Ung. | 85 | 4,2 | 97 | 76,8 |
| 10 | 2 | 10 | Ung. | 76 | 4,0 | 96 | 75,6 |
| 11 | 3 | 10 | Ung. | 53 | 3,2 | 96 | 77,2 |
| 12 | 4 | 10 | Ung. | 82 | 3,6 | 94 | 76,4 |
| 13 | 5 | 10 | Ung. | 67 | 4,1 | 96 | 71,5 |
| 14 | 6 | 10 | Ung. | 54 | 4,1 | 96 | 71,8 |
| 15 | 7 | 10 | Ung. | 45 | 6,5 | 94 | 73,2 |
| 16 | 8 | 10 | Ung. | 75 | 6,2 | 97 | 72,2 |
| 17 | 8 | 20 | Ung. | 82 | 12,5 | 86 | 66,4 |

a) bezogen auf Polymermischung

6

**Patentansprüche**

1. Thermoplastische Formmassen bestehend aus
1) 1—99 Gew.-% eines Pfropfsubstrates, das sich zusammensetzt aus
a) 1—99 Gew.-% eines (Meth)Acrylsäure-$C_1$—$C_{18}$-Alkylesterhomo- oder -copolymerisats mit einer Glastemperatur unter 0°C
b) 99—1 Gew.-% eines Celluloseesters einer oder mehrerer aliphatischer $C_1$—$C_5$-Carbonsäuren und
2) 99—1 Gew.-% polymerisierten Einheiten von
a) 100 bis 80 Gew.-% Vinylestern und/oder Alkylestern der Acryl- und/oder Methacrylsäure und
b) 0—20 Gew.-% $C_2$—$C_4$-α-Olefinen,
wobei die Summe der Komponenten 1) und 2) sowie a) und b) jeweils 100 Gew.-% beträgt.
2. Thermoplastische Formmassen nach Anspruch 1 bestehend aus
1) 1—99 Gew.-% eines Pfropfsubstrates, das sich zusammensetzt aus
a) 1—99 Gew.-% eines (Meth)Acrylsäureester-homo- oder -copolymerisats und
b) 99—1 Gew.-% eines Celluloseesters einer oder mehrerer aliphatischer $C_1$—$C_5$-Carbonsäuren und
2) 99 bis 1 Gew.-% polymerisierten Einheiten von
a) 100—80 Gew.-% Vinylacetat und/oder $C_1$—$C_4$-Alkylestern der Acryl- und/oder Methacrylsäure und
b) 0—20 Gew.-% $C_2$—$C_4$-α-Olefinen,
wobei die Summe der Komponenten 1) und 2), sowie a) und b) jeweils wo 100 Gew.-% beträgt.
3. Thermoplastische Formmassen nach Anspruch 1 und 2, bestehend aus
1) 20—95 Gew.-% eines Pfropfsubstrates, das sich zusammensetzt aus
a) 20—95 Gew.-% eines (Meth)Acrylsäureesterhomo-oder-copolymerisats
b) 80—5 Gew.-% eines Celluloseesters einer oder mehrerer aliphatischer $C_1$—$C_5$-Carbonsäuren und
2) 85 bis 15 Gew.-% polymerisierten Einheiten von
a) 100—80 Gew.-% Vinylacetat und/oder $C_1$—$C_4$-Alkylestern der Acryl- und/oder Methacrylsäure und
b) 0—20 Gew.-% $C_2$—$C_4$-α-Olefinen,
wobei die Summe der Komponenten 1) und 2), sowie a) und b) jeweils 100 Gew.-% beträgt.
4. Thermoplastische Formmassen nach Anspruch 1—3, enthaltend als Komponenten 1b) Celluloseacetobutyrat, Celluloseacetopropionat, Celluloseacetat oder deren Mischungen.
5. Thermoplastische Formmassen bestehend aus
I) 1 bis 99, vorzugsweise 50 bis 99 Gew.-% eines Celluloseesters einer oder mehrerer aliphatischer $C_1$—$C_5$-Carbonsäuren und
II) 99 bis 1, vorzugsweise 50 bis 1 Gew.-% eines Copfropfpolymerisats aus
1) 1 bis 99, vorzugsweise 15 bis 85 Gew.-% eines Pfropfsubstrates, das sich zusammensetzt aus
a) 1 bis 99, vorzugsweise 20—95 Gew.-% eines (Meth)Acrylsäure $C_1$—$C_{18}$-alkylester-homo- oder -copolymerisats und
b) 99—1, vorzugsweise 80—5 Gew.-% eines Celluloseesters einer oder mehrerer aliphatischer $C_1$—$C_5$-Carbonsäuren und
2) 99—1, vorzugsweise 85—15 Gew.-% polymerisierten Einheiten von
a) 100 bis 80 Gew.-% Vinylestern
und/oder Alkylestern der Acryl- und/oder Methacrylsäure und
b) 0—20 Gew.-% $C_2$—$C_4$-α-Olefinen,
wobei die Summe der Komponenten I) und II), 1) und 2), sowie a) und b) jeweils 100 Gew.-% beträgt.

**Revendications**

1. Compositions thermoplastiques à mouler, consistant en:
1) 1 à 99% en poids d'un substrat de greffage, qui se compose de:
a) 1 à 99% en poids d'un homo- ou co-polymère d'un ester alkylique (en $C_1$—$C_{18}$) de l'acide (méth)acrylique, ayant une température de transition vitreuse inférieure à 0°C,
b) 99 à 1% en poids d'un ester de cellulose d'un ou plusieurs acides carboxyliques aliphatiques en $C_1$ à $C_5$, et
2) 99 à 1% en poids de motifs polymérisés de:
a) 100 à 80% en poids d'esters vinyliques et/ou d'esters alkyliques de l'acide acrylique et/ou de l'acide méthacrylique, et
b) 0 à 20% en poids d'α-oléfines en $C_2$ à $C_4$,
la somme des composants 1) et 2), ainsi que a) et b), formant à chaque fois 100% en poids.
2. Compositions thermoplastiques à mouler selon la revendication 1, consistant en:
1) 1 à 99% en poids d'un substrat de greffage, qui se compose de:
a) 1 à 99% en poids d'un homo- ou co-polymère d'un ester d'acide (méth)acrylique, et
b) 99 à 1% en poids d'un ester cellulosique d'un ou plusieurs acides carboxyliques aliphatiques en $C_1$ à $C_5$, et
2) 99 à 1% en poids de motifs polymérisés de:
a) 100 à 80% en poids d'acétate de vinyle et/ou d'esters alkyliques en $C_1$ à $C_4$ de l'acide acrylique et/ou de l'acide méthacrylique, et

7

b) 0 à 20% en poids d'α-oléfines en $C_2$ à $C_4$,

la somme de composants 1) et 2), ainsi que a) et b), formant à chaque fois 100% en poids.

3. Compositions thermoplastiques à mouler selon la revendication 1 ou 2, consistant en:

1) 20 à 95% en poids d'un substrat de greffage, qui se compose de:

a) 20 à 95% en poids d'un homo- ou co-polymère d'éster de l'acide (méth)acrylique,

b) 80 à 5% en poids d'un ester cellulosique d'un ou plusieurs acides carboxyliques aliphatiques en $C_1$ à $C_5$, et

2) 85 à 15% en poids de motifs polymérisés de

a) 100 à 80% en poids d'acétate de vinyle et/ou d'esters alkyliques en $C_1$ à $C_4$ de l'acide acrylique et/ou méthacrylique, et

b) 0 à 20% en poids d'α-oléfines en $C_2$ à $C_4$,

la somme des composants 1) et 2), ainsi que a) et b), formant à chaque fois 100% en poids.

4. Compositions thermoplastiques à mouler selon les revendications 1 à 3, contenant comme composant 1b) de l'acétobutyrate de cellulose, de l'acétopropionate de cellulose, de l'acétate de cellulose ou leurs mélanges.

5. Compositions thermoplastiques à mouler, consistant en:

I) 1 à 99, avantageusement 50 à 99, % en poids d'un ester cellulosique d'un ou plusieurs acides carboxyliques aliphatiques en $C_1$ à $C_5$, et

II) 99 à 1, avantageusement 50 à 1, % en poids d'un copolymère greffé de:

1) 1 à 99, avantageusement 15 à 85, % en poids d'un substrat de greffage, qui se compose de:

a) 1 à 99, avantageusement 20 à 95, % en poids d'un homo- ou co-polymère d'ester alkylique (en $C_1$—$C_{18}$) de l'acide (méth)acrylique, et

b) 99 à 1, avantageusement 80 à 5, % en poids d'un ester cellulosique d'un ou plusieurs acides carboxyliques aliphatiques en $C_1$ à $C_5$, et

2) 99 à 1, avantageusement 85 à 15, % en poids de motifs polymérisés de:

a) 100 à 80% en poids d'esters vinyliques et/ou d'esters alkyliques de l'acide acrylique et/ou méthacrylique, et

b) 0 à 20% en poids d'α-oléfines en $C_2$ à $C_4$,

la somme des composants I) et II), 1) et 2) ainsi que a) et b) formant à chaque fois 100% en poids.

## Claims

1. Thermoplastic moulding compositions consisting of

1) 1—99% by weight of a graft substrate which is composed of

a) 1—99% by weight of a (meth)acrylic acid $C_1$—$C_{18}$-alkyl ester homo- or copolymer having a glass temperature below 0°C and

.b) 99—1% by weight of a cellulose ester of one or more aliphatic $C_1$—$C_5$-carboxylic acids and

2) 99—1% by weight of polymerised units of

a) 100 to 80% by weight of vinyl esters and/or alkyl esters of acrylic and/or methacrylic acid and

b) 0—20% by weight of $C_2$—$C_4$-α-olefins,

the sum of components 1) and 2) and of components a) and b) being in each case 100% by weight.

2. Thermoplastic moulding compositions according to Claim 1, consisting of

1) 1—99% by weight of a graft substrate which is composed of

a) 1—99% by weight of a (meth)acrylic acid ester homo- or copolymer and

b) 99—1% by weight of a cellulose ester of one or more aliphatic $C_1$—$C_5$-carboxylic acids and

2) 99 to 1% by weight of polymerised units of

a) 100—80% by weight of vinyl acetate and/or $C_1$—$C_4$-alkyl esters of acrylic and/or methacrylic acid and

b) 0—20% by weight of $C_2$—$C_4$-α-olefins,

the sum of components 1) and 2) and of components a) and b) being in each case 100% by weight.

3. Thermplastic moulding compositions according to Claim 1 and 2, consisting of

1) 20—95% by weight of a graft substrate which is composed of

a) 20—95% by weight of (meth)acrylic acid ester homo- or copolymer and

b) 80—5% by weight of a cellulose ester of one or more aliphatic $C_1$—$C_5$-carboxylic acids and

2) 85 to 15% by weight of polymerised units of

a) 100—80% by weight of vinyl acetate and/or $C_1$—$C_4$-alkyl esters of acrylic and/or methacrylic acid and

b) 0—20% by weight of $C_2$—$C_4$-α-olefins,

the sum of components 1) and 2) and of components a) and b) being in each case 100% by weight.

4. Thermoplastic moulding compositions according to Claim 1—3, containing as components 1b) cellulose acetobutyrate, cellulose acetopropionate, cellulose acetate or mixtures thereof.

5. Thermoplastic moulding compositions consisting of

I) 1 to 99, preferably 50 to 99% by weight, of a cellulose ester of one or more aliphatic $C_1$—$C_5$-carboxylic acids and

II) 99 to 1, preferably 50 to 1% by weight, of a cograft polymer of

1) 1 to 99, preferably 15 to 85% by weight of a graft substrate which is composed of

**0 054 857**

a) 1 to 99, preferably 20—95% by weight, of a (meth)acrylic acid $C_1$—$C_{18}$-alkyl ester homo- or copolymer and

b) 99—1, preferably 80—5% by weight, of a cellulose ester of one or more aliphatic $C_1$—$C_5$-carboxylic acids and

2) 99—1, preferably 85—15% by weight of polymerised units of

a) 100 to 80% by weight of vinyl esters and/or alkyl esters of acrylic and/or methacrylic acid and

b) 0—20% by weight of $C_2$—$C_4$-α-olefins,

the sum of components I) and II), 1) and 2) and a) and b) being in each case 100% by weight.

9